# FASCICULE DE BREVET EUROPEEN

(11) **EP 2 794 226 B1**
(45) Date de publication et mention de la délivrance du brevet: **05.02.2020**
(21) Numéro de dépôt: 12818799.4
(22) Date de dépôt: 21.12.2012
(51) Int. Cl.: C08L 23/12, C08F 8/50, C08J 3/20, C08K 5/14

(54) **PROCÉDÉ DE FABRICATION D'UNE COMPOSITION À BASE DE POLYMÈRE À FLUIDITÉ CONTRÔLÉE**
VERFAHREN ZUR HERSTELLUNG EINER POLYMERZUSAMMENSETZUNG MIT KONTROLLIERTEM FLUSS
METHOD FOR PRODUCING A POLYMER COMPOSITION HAVING CONTROLLED FLOW

(30) Priorité: 22.12.2011 FR 1162328
(43) Date de publication de la demande: 29.10.2014
(73) Titulaire: Compagnie Plastic Omnium, 69007 Lyon (FR); Institut National des Sciences Appliquées de Lyon, 69100 Villeurbanne (FR); Université Claude Bernard Lyon 1, 69100 Villeurbanne (FR)
(72) Inventeur: VIOT, Frédéric, 01450 Poncin (FR); CASSAGNAU, Philippe, 69390 Millerie (FR); MASSARDIER-NAGEOTTE, Valérie, 69100 Villeurbanne (FR); MANI, Skander, 01100 Bellignat (FR)
(74) Mandataire: Remy, Vincent Noel Paul
(86) Numéro de dépôt international: PCT/FR2012/053035
(87) Numéro de publication internationale: WO 2013/093364

(56) Documents cités:
- GB-A- 1 043 082
- US-A- 4 493 923

## Description

La présente invention concerne le domaine des compositions comprenant des matières plastiques, notamment thermoplastiques. Elle s'applique en particulier à des compositions pour la fabrication de pièces automobiles.

Afin de faire baisser les émissions de CO₂ des véhicules, on tente de réduire leur poids. Entre autres mesures utilisées, on envisage de diminuer l'épaisseur de certaines pièces, notamment des pièces de carrosserie.

On connaît de l'état de la technique un procédé de fabrication d'une pièce en matière plastique thermoplastique. Au cours de ce procédé, on fabrique une composition par extrusion et on introduit cette composition dans un moule. La composition comprend une ou plusieurs polyoléfines, par exemple un mélange de polyéthylène et de polypropylène. Pour améliorer le mélangeage des différentes polyoléfines entre elles, la composition comprend généralement un compatibilisant, par exemple un copolymère de type EOR (éthylène-octène rubber).

Afin d'obtenir une pièce de grandes longueur et largeur mais de faible épaisseur, il est préférable de contrôler la fluidité de la composition. Afin de diminuer la viscosité (c'est-à-dire augmenter le grade) de la composition, on ajoute un oxydant au début du procédé d'extrusion pour dégrader chimiquement l'un des polymères et ainsi en diminuer la masse molaire, notamment celle des chaînes de polypropylène.

Toutefois, la réaction de l'oxydant avec les polyoléfines, incluant le compatibilisant, conduit à des réactions de natures différentes en fonction de la nature de la polyoléfine. Plus précisément, les radicaux issus de la décomposition thermique de l'oxydant conduisent à la coupure des chaines de polypropylène (diminution des masses molaires par le mécanisme de beta-scission) et majoritairement aux branchements, voire à la réticulation, des chaînes polyéthylénées et copolymères associés. Cette modification structurale des chaînes de polyéthylène et des copolymères de l'éthylène entraîne une dégradation des caractéristiques mécaniques de la composition et des propriétés de surface de la pièce plastique obtenue par injection de cette composition. En particulier, la dégradation des propriétés de surface empêche l'adhérence d'une peinture sur la pièce et accentue les défauts d'aspect de la pièce peinte.

L'invention a pour but de fabriquer une pièce de faible épaisseur présentant de meilleures caractéristiques mécaniques et propriétés de surface.

A cet effet, l'invention a pour objet un procédé de fabrication d'une composition comprenant les quatre étapes suivantes, exécutées dans cet ordre :
□ on introduit dans un mélangeur un premier produit contenant majoritairement du polypropylène ;
□ en même temps que ou après le premier produit, on introduit un oxydant dans le mélangeur ;
□ après mélange de l'oxydant et du premier produit, on introduit dans le mélangeur un antioxydant pour limiter la dégradation thermo-oxydative des polyoléfines ;
□ en même temps que ou après l'antioxydant, on introduit dans le mélangeur un deuxième produit contenant majoritairement du polyéthylène et/ou un copolymère d'éthylène ;
et l'étape suivante :
□ en même temps que ou immédiatement après l'un des premier et deuxième produits, on introduit dans le mélangeur au moins un compatibilisant du polypropylène et du polyéthylène ou des copolymères d'éthylène.
□ Selon l'invention, le premier et/ou le deuxième produit est issu de recyclage, par exemple de matières plastiques issues de filières de recyclage de produits automobiles ou d'équipements électroniques et d'électroménager.
□ Selon l'invention également, l'antioxydant est un ester de phosphite.

Le compatibilisant n'est pas dégradé par l'oxydant quand on l'ajoute bien après l'oxydant, c'est-à-dire une fois que l'oxydant a réagi avec les polyoléfines.

Selon l'invention, il est important de respecter un certain ordre dans l'introduction des composants.

De préférence, le premier produit et l'oxydant sont introduits en même temps dans le mélangeur et, toujours de préférence, l'antioxydant et le deuxième produit sont introduits en même temps dans le mélangeur.

Toutefois, différentes possibilités restent ouvertes tout en respectant cet ordre. Ainsi, on peut suivre les ordres d'introduction suivants :
1°) polypropylène et oxydant mélangés, 2°) polyéthylène et antioxydant et compatibilisant mélangés ou
1°) polypropylène et oxydant mélangés, 2°) polyéthylène et antioxydant mélangés, 3°) compatibilisant ou
1°) polypropylène et oxydant mélangés, 2°) antioxydant, 3°) polyéthylène et compatibilisant mélangés ou
1°) polypropylène et oxydant mélangés, 2°) antioxydant, 3°) polyéthylène, 4°) compatibilisant ou
1°) polypropylène et compatibilisant et oxydant mélangés, 2°) polyéthylène et antioxydant mélangés.

La composition ainsi obtenue présente une fluidité contrôlée selon la norme ISO 1133 (230°C, 2,16kg) de 10 à 40g/10min, de préférence de 20 à 35g/10min, ce qui est favorable notamment pour l'allongement à la rupture et permet la fabrication d'une pièce de faible épaisseur. De plus, les deux polyoléfines, compatibilisées par l'ajout de compatibilisant, permettent d'obtenir d'excellentes caractéristiques mécaniques répondant au cahier des charges. Enfin, le contrôle de la dégradation et de la stabilisation thermique de la composition permet d'obtenir de bonnes propriétés de surface permettant ainsi d'améliorer l'adhérence d'une peinture sur la pièce sans présence de défauts d'aspects.

On comprendra que chaque polyoléfine est dite majoritairement présente si elle est présente à hauteur d'au moins 50% en masse du produit qui la contient.

Selon des caractéristiques optionnelles du procédé :
□ Le compatibilisant est introduit dans le mélangeur en même temps que ou immédiatement après le premier produit.
□ Le compatibilisant est un compatibilisant à base de polypropylène.
□ Le compatibilisant est introduit dans le mélangeur en même temps que ou immédiatement après le deuxième produit.
□ Le compatibilisant est un copolymère de type EOR (éthylène-octène rubber).
□ Les produits issus du recyclage comprennent généralement des mélanges de polyoléfines de natures distinctes. Ainsi, dans le cas où le polypropylène est issu du recyclage, il comprend généralement un mélange d'un polypropylène majoritaire et d'un polyéthylène minoritaire. Le premier produit comprend ainsi entre 80 et 95 % du polypropylène en masse totale, et de préférence entre 90 et 95 %, et donc entre environ 5 et environ 20 % du polyéthylène en masse totale, et de préférence entre 5 et 10 %.

L'oxydant réduit la masse molaire des chaînes de polypropylène et permet ainsi l'augmentation de la fluidité de la composition. A l'inverse, si on ajoute l'oxydant à un polyéthylène, on provoque majoritairement des branchements (couplage de chaînes), voire la réticulation du polyéthylène. Toutefois, comme le polyéthylène du premier produit y est présent minoritairement, la dégradation de la phase polyéthylène modifie peu le comportement rhéologique de la composition. Ainsi, la viscosité de la formulation est contrôlée par la phase polypropylène, dont la fluidité augmente avec la coupure des chaînes due à l'action radicalaire de l'oxydant. Par ailleurs, comme l'oxydant n'est pas ajouté directement avec le polyéthylène, ou le copolymère d'éthylène, on évite ainsi la réticulation du polyéthylène ou du copolymère d'éthylène qui provoquerait une diminution de la fluidité de la composition et surtout une dégradation des aspects de surface de la pièce injectée et peinte.

Selon d'autres caractéristiques optionnelles du procédé:
□ On ajoute entre 0,2 et 2 %, bornes incluses, d'oxydant en masse totale de la composition.
□ On ajoute entre 1 et 3%, bornes incluses, d'antioxydant en masse totale de la composition.
□ La composition comprend au moins 50 % et de préférence 70 % de polypropylène en masse totale de la composition.
□ L'oxydant est un abstracteur d'hydrogène, de préférence un peroxyde organique.
□ Pendant tout ou partie du procédé et de préférence après avoir ajouté le deuxième produit et le compatibilisant, on maintient le mélange sous atmosphère inerte vis-à-vis de l'oxydation.

L'invention a également pour objet une composition susceptible d'être obtenue par un procédé tel que défini ci-dessus.

Une telle composition comprend:
□ un polypropylène comme première polyoléfine et soit un polyéthylène, soit un copolymère d'éthylène, soit les deux comme deuxième polyoléfine,
□ au moins un compatibilisant des première et deuxième polyoléfines,
□ au moins un produit de réaction entre la première et/ou la deuxième polyoléfines et un antioxydant.
□ et présente une fluidité contrôlée selon la norme ISO 1133 (230°C, 2,16 kg) de 10 à 40g/10min, de préférence de 20 à 35g/10min.

La composition comprend en outre des adjuvants tels que du talc, des charges renforçantes, par exemple minérales. Est également divulgué, un procédé de fabrication d'une pièce dans lequel on fabrique une composition en mettant en œuvre un procédé de fabrication d'une composition tel que défini ci-dessus et on moule la pièce à partir de la composition.

Est également divulguée, une pièce susceptible d'être obtenue par un procédé de fabrication d'une pièce tel que défini ci-dessus.

Une telle pièce comprend:
- un polypropylène comme première polyoléfine et soit un polyéthylène, soit un copolymère d'éthylène, soit les deux comme deuxième polyoléfine,
- au moins un compatibilisant des première et deuxième polyoléfines,
- au moins un produit de réaction entre la première et/ou la deuxième polyoléfines et un antioxydant.

Optionnellement, la pièce forme au moins une partie d'une pièce de carrosserie pour véhicule automobile. Est également divulgué, un dispositif d'extrusion d'une composition comprenant une première entrée principale située en amont et apte à l'introduction d'au moins un produit comprenant une première polyoléfine et/ou d'un oxydant et/ou d'un compatibilisant de la première polyoléfine avec une deuxième polyoléfine, caractérisé en ce qu'il comprend au moins une deuxième entrée principale agencée en aval de la première entrée principale et apte à l'introduction d'au moins un produit comprenant la deuxième polyoléfine et/ou d'un antioxydant et/ou d'un compatibilisant des deux polyoléfines.

Selon d'autres caractéristiques avantageuses :
- Le dispositif comprend :
   - une entrée secondaire apte à l'introduction d'un oxydant et agencée entre la première entrée principale et la deuxième entrée principale,
   - une entrée secondaire apte à l'introduction d'un antioxydant et agencée entre la première entrée principale ou, le cas échéant, l'entrée secondaire d'introduction de l'oxydant, et la seconde entrée principale,
   - une entrée secondaire apte à l'introduction d'un compatibilisant et agencée en aval de la seconde entrée principale, ce qui présente l'avantage de ne pas dégrader ce compatibilisant par l'oxydant.
- Le dispositif comprend des moyens de mise sous atmosphère inerte vis-à-vis de l'oxydation, de préférence de son tronçon situé en aval des entrées d'introduction du deuxième produit et du compatibilisant, jusqu'à une sortie du dispositif.

L'invention sera mieux comprise à la lecture de la description qui va suivre, donnée uniquement à titre d'exemple non limitatif et faite en se référant aux dessins dans lesquels :
- la figure 1 est une représentation schématique d'un dispositif selon l'invention ;
- la figure 2 est un organigramme d'un procédé selon l'invention de fabrication d'une composition ;
   □ la figure 3 est un organigramme d'un procédé selon l'invention de fabrication d'une pièce ;
   □ la figure 4 est une vue en perspective d'une pièce selon l'invention fabriquée en mettant en œuvre les procédés illustrés sur les figures 2 et 3 ;
   □ la figure 5 est une vue de détails de la zone IV de la figure 4 ;
   □ la figure 6 est une vue analogue à celle de la figure 1, montrant une variante du dispositif.

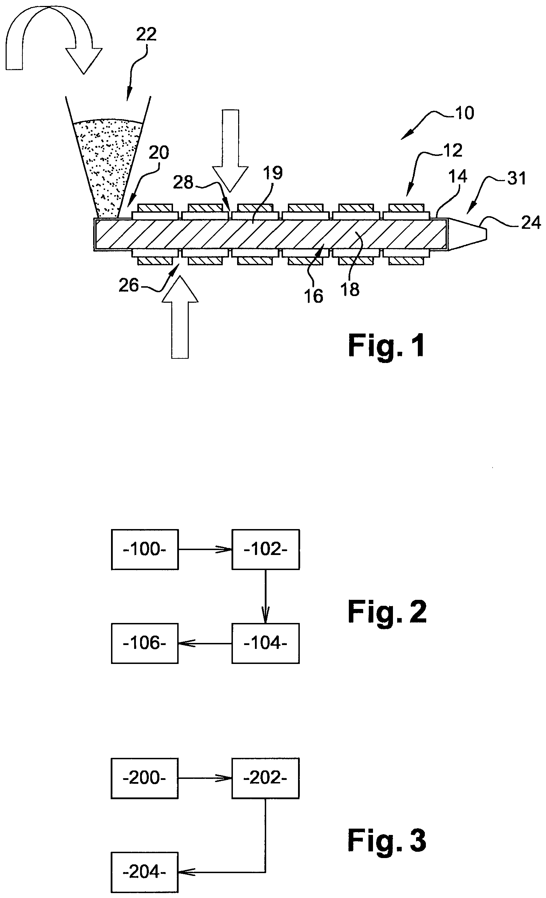

On a représenté sur la figure 1 un dispositif d'extrusion selon l'invention et désigné par la référence générale 10.

Le dispositif 10 forme une extrudeuse et comprend un stator 12 formant un fourreau 14 et un rotor 16 formant un système de vis (monovis ou bivis) sans fin 18. La vis 18 est mobile en rotation dans le fourreau 14. Le fourreau 14 et la vis 18 délimitent un espace annulaire 19 dans lequel progresse une composition à extruder.

Le dispositif 10 comprend une première entrée principale située en amont 20 apte à l'introduction de composés, en l'espèce un oxydant et un produit comprenant une ou plusieurs polyoléfines. Le dispositif 10 comprend une trémie 22 permettant l'introduction de l'oxydant et du produit dans la première entrée principale 20. Le dispositif 10 comprend également une sortie 31 munie d'une tête d'extrusion 24.

Le dispositif 10 comprend une entrée intermédiaire 26 agencée juste en aval de la première entrée principale 20. L'entrée intermédiaire 26 est apte à l'introduction d'un antioxydant.

Le dispositif comprend également une deuxième entrée principale 28 agencée en aval de la première entrée principale 20 et de l'entrée intermédiaire 26. La deuxième entrée principale 28 est apte à l'introduction d'un produit comprenant un ou plusieurs polyoléfines et d'un compatibilisant des polyoléfines entre elles.

On va maintenant décrire un procédé de fabrication d'une composition en référence à la figure 2 illustrant schématiquement les principales étapes de ce procédé.

Lors d'une étape 100, on mélange un oxydant à un premier produit comprenant une polyoléfine, majoritairement du polypropylène. On met en œuvre l'étape 100 en dehors du dispositif 10.

L'oxydant est un peroxyde et de préférence un peroxyde organique tel que dicumyl peroxyde. On ajoute entre 0,2 et 2 %, bornes incluses, de peroxyde en masse totale de la composition, de préférence entre 0,4 et 1 % de peroxyde.

Le premier produit est une matière thermoplastique issue du recyclage et comprend entre 80 et 95 % en masse du premier produit de polypropylène majoritaire et donc entre environ 5 et environ 20 % en masse du premier produit de polyéthylène. En variante, le premier produit est un polypropylène « commercial » comprenant plus de 80 % de polypropylène en masse du premier produit.

Ensuite, on place le mélange obtenu dans la trémie 22 de façon à introduire le mélange dans la première entrée principale 20 du dispositif 10.

Puis, dans une étape 102, on ajoute au mélange au moins un antioxydant.

On introduit l'antioxydant dans le dispositif 10 au moyen de la première entrée intermédiaire 26 lorsque le mélange progresse dans l'espace annulaire 19. Ainsi, vis-à-vis de la masse du mélange passant en regard de la première entrée intermédiaire 26, l'antioxydant est ajouté au mélange postérieurement à l'étape de mélange 100. L'antioxydant est sélectionné parmi un précurseur d'un acide benzoïque, un ester de phosphite et un précurseur d'un nitroxyde. En l'espèce, l'antioxydant utilisé est un précurseur d'un acide benzoïque, le pentaerythritol tetrakis (3-(3,5-di-ter-butyl-4-hydroxyphenyl)propionate). En variante, l'antioxydant utilisé est un ester de phosphite, le tris(2,4-di-(tert)-butylphenyl)phosphite. On ajoute entre 1 et 3% bornes incluses d'anti-oxydant en masse totale de la composition. En l'espèce, on ajoute 2 % d'antioxydant.

Puis, lors d'une étape 104 ultérieure à l'étape 102, on ajoute au mélange un deuxième produit comprenant une deuxième polyoléfine majoritaire.

Le deuxième produit est un polyéthylène commercial comprenant plus de 80 % de polyéthylène en masse du deuxième produit.

Enfin, dans une étape 106, on ajoute au mélange au moins un compatibilisant du polyéthylène et du polypropylène.

On introduit le compatibilisant dans le dispositif 10 au moyen de la deuxième entrée principale 28 lorsque le mélange progresse dans l'espace annulaire 19. Ainsi, vis-à-vis de la masse du mélange passant en regard de la deuxième entrée principale 28, le compatibilisant est ajouté au mélange postérieurement aux étapes de mélange 100, 102 et d'ajout de l'antioxydant 104. Le compatibilisant est un copolymère à blocs de type EOR, copolymère à base d'éthylène. En l'espèce, on ajoute 5 % de compatibilisant.

Enfin, on récupère la composition sous la forme d'un extrudât à la tête d'extrusion 24. La composition comprend au moins 50 % et de préférence 70 % de polypropylène en masse totale de la composition.

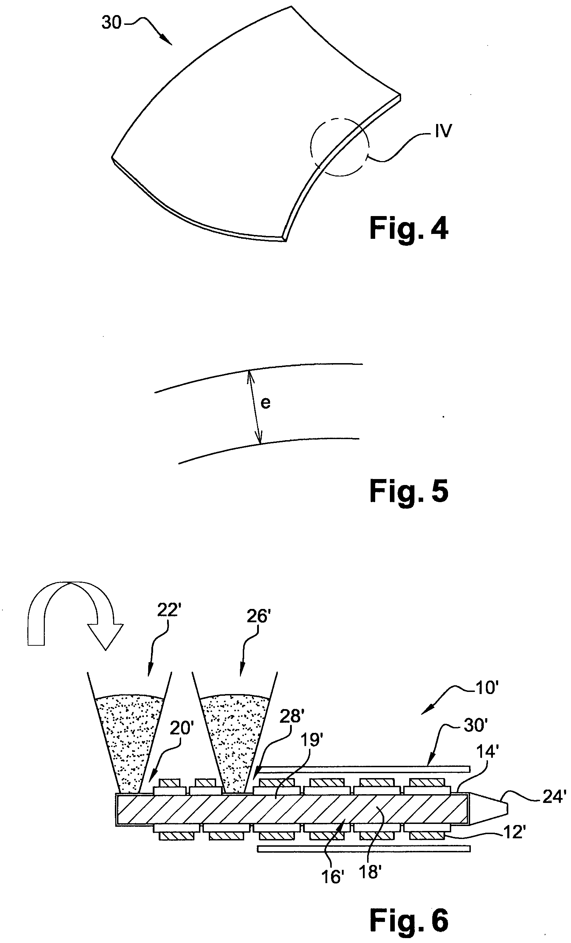

On va maintenant décrire un procédé de fabrication d'une pièce 30 illustrée à la figure 4 en référence à la figure 3 illustrant schématiquement les principales étapes de ce procédé.

Lors d'une étape 200, on récupère la composition fabriquée en mettant en œuvre le procédé décrit ci-dessus. Puis, dans une étape 202, on introduit, par exemple par injection, la composition dans un moule et on moule la pièce 30. Enfin, dans une étape 204, on refroidit le moule et on extrait la pièce 30. La pièce 30 pourra ultérieurement être traitée en surface. On pourra notamment y appliquer une peinture.

On a représenté sur les figures 4 et 5 la pièce 30. La pièce 30 forme une peau extérieure d'une pièce de carrosserie pour véhicule automobile, ici d'un capot. En référence à la figure 5, la pièce 30 présente une épaisseur e inférieure à 3 mm , ce qui permet, selon les dimensions de la pièce, un réduction de poids de 5% à 15%.

La pièce 30 peut être notamment une peau de pare-choc, un panneau d'ouvrant (porte latérale ou hayon, par exemple), une aile.

Dans la variante représentée à la figure 6, on retrouve les constituants précédemment décrits d'un dispositif 10' formant une extrudeuse, à savoir un stator 12' formant un fourreau 14' et un rotor 16' formant une vis sans fin 18'. La vis 18' est mobile en rotation dans le fourreau 14.' Le fourreau 14' et la vis 18' délimitent un espace annulaire 19' dans lequel progresse une composition à extruder.

Dans cette variante, le dispositif 10' comprend une première entrée principale située en amont 20', apte à l'introduction de composés, et une trémie 22' permettant l'introduction d'un mélange de i'oxydant et d'un premier produit contenant majoritairement du polypropylène dans cette entrée située en amont 20'. Le dispositif 10' comprend également une sortie munie d'une tête d'extrusion 24'.

Le premier produit comprend environ 90% en masse de polypropylène. Il peut être issu de recyclage.

A la différence du dispositif de la figure 1, le dispositif 10' comprend une deuxième trémie 26' pour l'introduction, dans une deuxième entrée principale 28' située en aval de la première entrée 20', d'un mélange :
- d'un deuxième produit contenant majoritairement un polyéthylène commercial contenant plus de 80% de polyéthylène en masse du deuxième produit,
- de charges telles que des charges minérales, par exemple du talc, du carbonate de calcium, de la silice...
- d'additifs tels que des colorants, des plastifiants...
- d'un antioxydant, par exemple un précurseur d'un acide benzoïque tel que celui déjà indiqué en référence à la figure 3,
- d'un agent compatibilisant du polypropylène et du polyéthylène, par exemple un copolymère à blocs de type EOR, dans un quantité de 5% en masse du total du mélange.

Le dispositif 10' comporte en outre des moyens 30' de mise sous atmosphère inerte vis-à-vis de l'oxydation, c'est-à-dire une atmosphère suffisamment pauvre en oxygène pour empêcher l'oxydation, par exemple sous azote, de son tronçon d'extrudeuse situé entre l'entrée 28' et la tête d'extrusion 24', de façon à limiter l'oxydation, ce qui contribue à l'obtention de meilleures caractéristiques mécaniques de la pièce obtenue par injection de l'extrudât issu de la tête d'extrusion 24.

L'invention ne se limite pas aux modes de réalisation décrits précédemment.

En effet, la composition pourra être fabriquée en utilisant un autre dispositif qu'un dispositif d'extrusion ou avec un ordre d'incorporation des composants différents.

On pourra également fabriquer d'autres pièces que des pièces de carrosserie pour véhicule automobile et même des pièces destinées à d'autres domaines que celui de l'automobile.

On pourra utiliser des produits comprenant d'autres polyoléfines que le polyéthylène et le polypropylène, par exemple les copolymères propylène-éthylène, les copolymères polyéthylène-acétate de vinyle, des copolymères polyéthylène-n polyoléfines, le poly-isobutène, le polyméthylpentène, le polybutène-1 ou encore des copolymères éthylène-acide acrylique.

En outre, les modes de réalisation peuvent se combiner entre eux. En particulier, on pourra prévoir les moyens de mise sous atmosphère inerte dans le dispositif de la figure 1.

## Revendications

1. Procédé de fabrication d'une composition, **caractérisé en ce qu'il** comprend les quatre étapes suivantes, exécutées dans cet ordre :
- on introduit dans un mélangeur un premier produit contenant majoritairement du polypropylène ;
- en même temps que ou après le premier produit, on introduit un oxydant dans le mélangeur ;
- après mélange de l'oxydant et du premier produit, on introduit dans le mélangeur un antioxydant pour limiter la dégradation thermo-oxydative des polyoléfines ;
- en même temps que ou après l'antioxydant, on introduit dans le mélangeur un deuxième produit contenant majoritairement du polyéthylène et/ou un copolymère d'éthylène ;
et l'étape suivante :
- en même temps que ou immédiatement après l'un des premier et deuxième produits, on introduit dans le mélangeur au moins un compatibilisant du polypropylène et du polyéthylène ou des copolymères d'éthylène,
procédé dans lequel le premier et/ou le deuxième produit est issu de recyclage, et l'antioxydant est un ester de phosphite.

2. Procédé selon la revendication précédente, dans lequel le premier produit et l'oxydant sont introduits en même temps dans le mélangeur.

3. Procédé selon l'une quelconque des revendications précédentes, dans lequel l'antioxydant et le deuxième produit sont introduits en même temps dans le mélangeur.

4. Procédé selon l'une quelconque des revendications précédentes, dans lequel le compatibilisant est introduit dans le mélangeur en même temps que ou immédiatement après le premier produit.

5. Procédé selon la revendication 4, dans lequel le compatibilisant est un compatibilisant à base de polypropylène.

6. Procédé selon l'une quelconque des revendications 1 à 3, dans lequel le compatibilisant est introduit dans le mélangeur en même temps que ou immédiatement après le deuxième produit.

7. Procédé selon la revendication 6, dans lequel le compatibilisant est un copolymère de type EOR (éthylène-octène rubber).

8. Procédé selon l'une quelconque des revendications précédentes, dans lequel le premier produit comprend entre 80 et 95 % du polypropylène en masse totale du premier produit et entre 5 et 20 % du polyéthylène en masse totale du premier produit.

9. Procédé selon la revendication 8, dans lequel premier produit comprend entre 90 et 95 % du polypropylène en masse totale du premier produit et entre 5 et 10 % du polyéthylène en masse totale du premier produit.

10. Procédé selon l'une quelconque des revendications précédentes, dans lequel on ajoute entre 0,2 et 2 %, bornes incluses, d'oxydant en masse totale de la composition.

11. Procédé selon l'une quelconque des revendications précédentes, dans lequel on ajoute entre 1 et 3%, bornes incluses, d'antioxydant en masse totale de la composition.

12. Procédé selon l'une quelconque des revendications précédentes, dans lequel la composition comprend au moins 50 % et de préférence 70 % de polypropylène en masse totale de la composition.

13. Procédé selon l'une quelconque des revendications précédentes, dans lequel l'oxydant est un abstracteur d'hydrogène, de préférence un peroxyde organique.

14. Procédé selon l'une quelconque des revendications précédentes, dans lequel, pendant tout ou partie du procédé et de préférence après avoir ajouté le deuxième produit et le compatibilisant, on maintient le mélange sous atmosphère inerte vis-à-vis de l'oxydation.

## Patentansprüche

1. Verfahren zur Herstellung einer Zusammensetzung, **dadurch gekennzeichnet, dass** es die vier folgenden Schritte umfasst, die in dieser Reihenfolge ausgeführt werden:
- Einbringen, in einen Mischer, eines ersten Produkts, das mehrheitlich Polypropylen enthält;
- gleichzeitig mit oder nach dem ersten Produkt, Einbringen eines Oxidans in den Mischer;
- nach Mischen des Oxidans und des ersten Produkts, Einbringen, in den Mischer, eines Antioxidans, um die thermooxidative Zersetzung der Polyolefine zu begrenzen;
- gleichzeitig mit oder nach dem Antioxidans, Einbringen, in den Mischer, eines zweiten Produkts, das mehrheitlich Polyethylen und/oder ein Ethylen-Copolymer enthält;
und den folgenden Schritt:
- gleichzeitig mit oder unmittelbar nach einem von dem ersten und zweiten Produkt, Einbringen in den Mischer mindestens eines Verträglichkeitsvermittlers für Polypropylen und für Polyethylen oder für EthylenCopolymere,
wobei bei diesem Verfahren das erste und/oder das zweite Produkt aus Recycling hervorgegangen sind und das Antioxidans ein Phosphitester ist.

2. Verfahren nach dem vorhergehenden Anspruch, bei dem das erste Produkt und das Oxidans gleichzeitig in den Mischer eingebracht werden.

3. Verfahren nach einem der vorhergehenden Ansprüche, bei dem das Antioxidans und das zweite Produkt gleichzeitig in den Mischer eingebracht werden.

4. Verfahren nach einem der vorhergehenden Ansprüche, bei dem der Verträglichkeitsvermittler in den Mischer gleichzeitig mit oder unmittelbar nach dem ersten Produkt eingebracht wird.

5. Verfahren nach Anspruch 4, bei dem der Verträglichkeitsvermittler ein Verträglichkeitsvermittler auf Polypropylenbasis ist.

6. Verfahren nach einem der Ansprüche 1 bis 3, bei dem der Verträglichkeitsvermittler in den Mischer gleichzeitig mit oder unmittelbar nach dem zweiten Produkt eingebracht wird.

7. Verfahren nach Anspruch 6, bei dem der Verträglichkeitsvermittler ein Copolymer des EOR-(ethylene-octene rubber)Typs ist.

8. Verfahren nach einem der vorhergehenden Ansprüche, bei dem das erste Produkt zwischen 80 und 95 % Polypropylen bezogen auf die Gesamtmasse des ersten Produkts und zwischen 5 und 20 % Polyethylen bezogen auf die Gesamtmasse des ersten Produkts enthält.

9. Verfahren nach Anspruch 8, bei dem das erste Produkt zwischen 90 und 95 % Polypropylen bezogen auf die Gesamtmasse des ersten Produkts und zwischen 5 und 10 % Polyethylen bezogen auf die Gesamtmasse des ersten Produkts enthält.

10. Verfahren nach einem der vorhergehenden Ansprüche, bei dem zwischen 0,2 und 2 %, jeweils einschließlich, Oxidans bezogen auf die Gesamtmasse der Zusammensetzung zugefügt werden.

11. Verfahren nach einem der vorhergehenden Ansprüche, bei dem zwischen 1 und 3 %, jeweils einschließlich, Antioxidans bezogen auf die Gesamtmasse der Zusammensetzung zugefügt werden.

12. Verfahren nach einem der vorhergehenden Ansprüche, bei dem die Zusammensetzung mindestens 50 % und vorzugsweise 70 % Polypropylen bezogen auf die Gesamtmasse der Zusammensetzung enthält.

13. Verfahren nach einem der vorhergehenden Ansprüche, bei dem das Oxidans ein Wasserstoffabspalter ist, vorzugsweise ein organisches Peroxid.

14. Verfahren nach einem der vorhergehenden Ansprüche, bei dem, während des gesamten oder eines Teils des Verfahrens und vorzugsweise nach dem Zufügen des zweiten Produkts und des Verträglichkeitsvermittlers, das Gemisch unter oxidationsträger Atmosphäre gehalten wird.

## Claims

1. Method for producing a composition, **characterized in that** it comprises the following four steps, carried out in this order:
- a first product, containing predominantly polypropylene, is introduced into a mixer;
- at the same time as or after the first product, an oxidant is introduced into the mixer;
- after mixing the oxidant and the first product, an antioxidant is introduced into the mixer in order to limit the thermo-oxidative degradation of the polyolefins;
- at the same time as or after the antioxidant, a second product, containing predominantly polyethylene and/or a copolymer of ethylene, is introduced into the mixer;
and the following step:
- at the same time as or immediately after one of the first or second products, at least one compatibilizing agent for polypropylene and polyethylene or for copolymers of ethylene is introduced into the mixer,
the first and/or second product being products of recycling, and the antioxidant being a phosphite ester.

2. Method according to the preceding claim, wherein the first product and the oxidant are introduced simultaneously into the mixer.

3. Method according to either of the preceding claims, wherein the antioxidant and the second product are introduced simultaneously into the mixer.

4. Method according to any of the preceding claims, wherein the compatibilizing agent is introduced into the mixer at the same time as or immediately after the first product.

5. Method according to claim 4, wherein the compatibilizing agent is a polypropylene-based compatibilizing agent.

6. Method according to any of claims 1 to 3, wherein the compatibilizing agent is introduced into the mixer at the same time as or immediately after the second product.

7. Method according to claim 6, wherein the compatibilizing agent is an EOR (ethylene-octene rubber) type copolymer.

8. Method according to any of the preceding claims, wherein the first product comprises between 80 and 95% polypropylene based on the total weight of the first product and between 5 and 20% polyethylene based on the total weight of the first product.

9. Method according to claim 8, wherein the first product comprises between 90 and 95% polypropylene based on the total weight of the first product and between 5 and 10% polyethylene based on the total weight of the first product.

10. Method according to any of the preceding claims, wherein between 0.2 and 2%, inclusive, of oxidant is added based on the total weight of the composition.

11. Method according to any of the preceding claims, wherein between 1 and 3%, inclusive, of antioxidant is added based on the total weight of the composition.

12. Method according to any of the preceding claims, wherein the composition comprises at least 50% and preferably 70% polypropylene based on the total weight of the composition.

13. Method according to any of the preceding claims, wherein the oxidant is a hydrogen abstractor, preferably an organic peroxide.

14. Method according to any of the preceding claims, wherein, during all or part of the method and preferably after adding the second product and the compatibilizing agent, the mixture is kept in an inert atmosphere with regard to the oxidation.
